# EUROPEAN PATENT APPLICATION

(11) **EP 4 832 602 A1**
(43) Date of publication of application: **28.10.2026**
(21) Application number: 24905404.0
(22) Date of filing: 10.05.2024
(51) Int. Cl.: H04W 56/00

(54) **INFORMATION RECEIVING METHOD AND APPARATUS, INFORMATION SENDING METHOD AND APPARATUS, TERMINAL, NETWORK DEVICE AND STORAGE MEDIUM**

(30) Priority: 22.12.2023 WO PCT/CN2023/141277
(71) Applicant: Beijing Xiaomi Mobile Software Co., Ltd., Beijing 100085 (CN)
(72) Inventor: WU, Shijuan, Beijing 100085 (CN); WANG, Lei, Beijing 100085 (CN)
(74) Representative: Hersina, Günter
(86) International application number: PCT/CN2024/092467
(87) International publication number: WO 2025/129900

(57) **Abstract**

The present disclosure relates to the technical field of communications, and in particular to an information receiving method and apparatus, an information sending method and apparatus, a terminal, a network device and a storage medium. The information receiving method comprises: receiving indication information sent by a network device, wherein the indication information is used by a terminal to determine the state of first information, and the state comprises at least one of the following: on-demand and non-on-demand. According to the present disclosure, the terminal can determine the state of the first information on the basis of the indication information sent by the network device, for example, it can be determined whether the first information is in an on-demand state or a non-on-demand state, so that unnecessary overhead caused by unnecessary operations of the terminal can be avoided.

## Description

### PRIORITY DECLARATION

The present disclosure claims priority to a PCT Application with application number PCT/CN2023/141277, filed on December 22, 2023, and titled "information receiving method and apparatus, information sending method and apparatus, terminal, network device and storage medium".

### TECHNICAL FIELD

The present disclosure relates to a field of communication technology, and specifically to an information receiving method, an information sending method, an information receiving apparatus, an information sending apparatus, a terminal, a network device, a communication device and a storage medium.

### BACKGROUND

During communication between a network device and a terminal, the network device can send information to the terminal, and the terminal can receive the information sent by the network device. However, in certain scenarios, the situation of sending information from the network device to the terminal may change, and there are some technical issues that urgently need to be addressed in these scenarios.

### SUMMARY

Embodiments of the present disclosure provide an information receiving method and apparatus, an information sending method and apparatus, a terminal, a network device and a storage medium.

According to a first aspect of embodiments of the present disclosure, an information receiving method is provided. The method is performed by a terminal and includes: receiving indication information sent by a network device, wherein the indication information is configured for the terminal to determine a state of first information, wherein the state includes at least one of on-demand, or non on-demand.

According to a second aspect of embodiments of the present disclosure, an information sending method is provided. The method is performed by a network device and includes: sending indication information to a terminal, wherein the indication information is configured for the terminal to determine a state of first information, wherein the state includes at least one of on-demand, or non on-demand.

According to a third aspect of embodiments of the present disclosure, an information receiving apparatus is provided. The apparatus includes: a receiving module, configured to receive indication information sent by a network device, wherein the indication information is configured for the terminal to determine a state of first information, wherein the state includes at least one of on-demand, or non on-demand.

According to a fourth aspect of embodiments of the present disclosure, an information sending apparatus is provided. The apparatus includes: a sending module, configured to send indication information to a terminal, wherein the indication information is configured for the terminal to determine a state of first information, wherein the state includes at least one of on-demand, or non on-demand.

According to a fifth aspect of embodiments of the present disclosure, an information sending method is provided, including: sending indication information by a network device to a terminal; and determining by the terminal, a state of first information according to the indication information, wherein the state includes at least one of on-demand, or non on-demand.

According to a sixth aspect of embodiments of the present disclosure, a terminal is provided, including one or more processors, wherein the terminal is configured to implement the information receiving method described in the first aspect.

According to a seventh aspect of embodiments of the present disclosure, a network device is provided, including one or more processors, wherein the network device is configured to implement the information sending method described in the second aspect.

According to an eighth aspect of embodiments of the present disclosure, a communication system is provided, including a terminal and a network device, wherein the terminal is configured to implement the information receiving method described in the first aspect, and the network device is configured to implement the information sending method described in the second aspect.

According to a ninth aspect of embodiments of the present disclosure, a storage medium is provided. The storage medium stores instructions that, when executed on a communication device, cause the communication device to implement the information receiving method described in the first aspect and/or the information sending method described in the second aspect.

According to embodiments of the present disclosure, the terminal can determine the state of the first information according to the indication information sent by the network device, for example, can determine whether the first information is in an on-demand state or a non on-demand state, which is conducive to avoiding unnecessary overhead caused by unnecessary operations of the terminal.

### BRIEF DESCRIPTION OF THE DRAWINGS

In order to provide a clearer explanation of the technical solution in embodiments of the present disclosure, a brief introduction will be given to the accompanying drawings required for the description of the embodiments. It is obvious that the accompanying drawings described below are only some embodiments of the present disclosure. For those skilled in the art, other drawings can be obtained based on these drawings without creative labor.
FIG. 1 is a schematic diagram of an architecture of a communication system according to embodiments of the present disclosure.
FIG. 2A is a schematic diagram of interaction in an information sending method according to an embodiment of the present disclosure.
FIG. 2B is a schematic diagram of a structure of a fixed-size MAC CE corresponding to one octet according to an embodiment of the present disclosure.
FIG. 2C is a schematic diagram of a structure of a fixed-size MAC CE corresponding to four octets according to an embodiment of the present disclosure.
FIG. 2D is a schematic diagram of a structure of an enhanced SCell activation or deactivation MAC CE with one octet Ci field according to an embodiment of the present disclosure.
FIG. 2E is a schematic diagram of a structure of an enhanced SCell activation or deactivation MAC CE with four octet Ci fields according to an embodiment of the present disclosure.
FIG. 2F is a schematic diagram of a structure of a variable size MAC CE corresponding to one octet according to an embodiment of the present disclosure.
FIG. 2G is a schematic diagram of a structure of a variable size MAC CE corresponding to four octets according to an embodiment of the present disclosure.
FIG. 3 is a schematic flowchart of an information receiving method according to an embodiment of the present disclosure.
FIG. 4 is a schematic flowchart of an information sending method according to an embodiment of the present disclosure.
FIG. 5 is a schematic block diagram of an information receiving apparatus according to an embodiment of the present disclosure.
FIG. 6 is a schematic block diagram of an information sending apparatus according to an embodiment of the present disclosure.
FIG. 7A is a block diagram of a communication device according to an embodiment of the present disclosure.
FIG. 7B is a block diagram of a chip according to an embodiment of the present disclosure.

### DETAILED DESCRIPTION

Embodiments of the present disclosure provide an information receiving method and apparatus, an information sending method and apparatus, a terminal, a network device and a storage medium.

In a first aspect, embodiments of the present disclosure provide an information receiving method, performed by a terminal. The method includes: receiving indication information sent by a network device, wherein the indication information is configured for the terminal to determine a state of first information, wherein the state includes at least one of on-demand, or non on-demand.

In the above embodiment, the terminal can determine the state of the first information based on the indication information sent by the network device, for example, can determine whether the first information is in an on-demand state or a non on-demand state, which is conducive to avoiding unnecessary operations by the terminal and causing unnecessary overhead.

In combination with some embodiments of the first aspect, in some embodiments, the first information includes at least one of: synchronization signal and physical down broadcast channel block (SSB); or system information block (SIB) 1.

In combination with some embodiments of the first aspect, in some embodiments, the indication information includes at least one of: a radio resource control (RRC) signaling; downlink control information (DCI); or a media access control-control element (MAC CE).

In combination with some embodiments of the first aspect, in some embodiments, the first information includes SSB, and the RRC signaling includes an information element indicating an SSB index.

In combination with some embodiments of the first aspect, in some embodiments, bits in the information element are all 0, and the information element is configured for the terminal to determine a state of the SSB as on-demand; and/or, at least one bit in the information element is not 0, and the information element is configured for the terminal to determine a state of the SSB as non on-demand.

In combination with some embodiments of the first aspect, in some embodiments, the first information includes SIB1, the RRC signaling does not include a first search space on a first bandwidth part, and the RRC signaling is configured for the terminal to determine a state of the SIB1 as on-demand; and/or, the RRC signaling includes a first search space on a first bandwidth part, and the RRC signaling is configured for the terminal to determine a state of the SIB1 as non on-demand.

In combination with some embodiments of the first aspect, in some embodiments, the first bandwidth part does not include at least one of: an initial bandwidth part where a control resource set CORESET#0 is located; an active bandwidth part with a first parameter same as that of the initial bandwidth part and a frequency domain range comprising CORESET#0; or an active bandwidth part in the initial bandwidth part.

In combination with some embodiments of the first aspect, in some embodiments, the DCI includes at least one of: legacy DCI; newly defined DCI; or legacy DCI scrambled with a newly defined radio network temporary identity.

In combination with some embodiments of the first aspect, in some embodiments, the legacy DCI includes at least one of: first DCI scrambled with a system information radio network temporary identity (SI-RNTI); or second DCI scrambled with a paging radio network temporary identity (P-RNTI).

In combination with some embodiments of the first aspect, in some embodiments, reserved bits in the legacy DCI are configured for the terminal to determine the state of the first information.

In combination with some embodiments of the first aspect, in some embodiments, a short message indicator information field in the second DCI is configured to indicate paging scheduling, and the reserved bits include bits in the short message indicator information field; and/or, a short message indicator information field in the second DCI is configured to indicate short message scheduling, and the reserved bits include bits outside the short message indicator information field.

In combination with some embodiments of the first aspect, in some embodiments, the MAC CE includes at least one of: a legacy MAC CE; or a newly defined MAC CE.

In combination with some embodiments of the first aspect, in some embodiments, the legacy MAC CE includes at least one of: a first MAC CE for cell activation; or a second MAC CE for cell deactivation.

In combination with some embodiments of the first aspect, in some embodiments, reserved bits in the legacy MAC CE are configured for the terminal to determine the state of the first information.

In combination with some embodiments of the first aspect, in some embodiments, the indication information further includes information of at least one cell, and the indication information is configured for the terminal to determine at least one of: a state of the first information in the at least one cell.

In combination with some embodiments of the first aspect, in some embodiments, the indication information is further configured for the terminal to determine an effective time of the state, or the effective time is determined based on a predefined manner.

In a second aspect, embodiments of the present disclosure provide an information sending method, performed by a network device. The method includes: sending indication information to a terminal, wherein the indication information is configured for the terminal to determine a state of first information, wherein the state includes at least one of on-demand, or non on-demand.

In combination with some embodiments of the second aspect, in some embodiments, the first information includes at least one of: synchronization signal and physical down broadcast channel block (SSB); or system information block (SIB) 1.

In combination with some embodiments of the second aspect, in some embodiments, the indication information includes at least one of: a radio resource control (RRC) signaling; downlink control information (DCI); or a media access control-control element (MAC CE).

In combination with some embodiments of the second aspect, in some embodiments, the first information includes SSB, and the RRC signaling includes an information element indicating an SSB index.

In combination with some embodiments of the second aspect, in some embodiments, bits in the information element are all 0, and the information element is configured for the terminal to determine a state of the SSB as on-demand; and/or, at least one bit in the information element is not 0, and the information element is configured for the terminal to determine a state of the SSB as non on-demand.

In combination with some embodiments of the second aspect, in some embodiments, the first information includes SIB1, the RRC signaling does not include a first search space on a first bandwidth part, and the RRC signaling is configured for the terminal to determine a state of the SIB1 as on-demand; and/or, the RRC signaling includes a first search space on a first bandwidth part, and the RRC signaling is configured for the terminal to determine a state of the SIB1 as non on-demand.

In combination with some embodiments of the second aspect, in some embodiments, the first bandwidth part does not include at least one of: an initial bandwidth part where a control resource set CORESET#0 is located; an active bandwidth part with a first parameter same as that of the initial bandwidth part and a frequency domain range comprising CORESET#0; or an active bandwidth part in the initial bandwidth part.

In combination with some embodiments of the second aspect, in some embodiments, the DCI includes at least one of: legacy DCI; newly defined DCI; or legacy DCI scrambled with a newly defined radio network temporary identity.

In combination with some embodiments of the second aspect, in some embodiments, the legacy DCI includes at least one of: first DCI scrambled with a system information radio network temporary identity (SI-RNTI); or second DCI scrambled with a paging radio network temporary identity (P-RNTI).

In combination with some embodiments of the second aspect, in some embodiments, reserved bits in the legacy DCI are configured for the terminal to determine the state of the first information.

In combination with some embodiments of the second aspect, in some embodiments, a short message indicator information field in the second DCI is configured to indicate paging scheduling, and the reserved bits include bits in the short message indicator information field; and/or, a short message indicator information field in the second DCI is configured to indicate short message scheduling, and the reserved bits include bits outside the short message indicator information field.

In combination with some embodiments of the second aspect, in some embodiments, the MAC CE includes at least one of: a legacy MAC CE; or a newly defined MAC CE.

In combination with some embodiments of the second aspect, in some embodiments, the legacy MAC CE includes at least one of: a first MAC CE for cell activation; or a second MAC CE for cell deactivation.

In combination with some embodiments of the second aspect, in some embodiments, reserved bits in the legacy MAC CE are configured for the terminal to determine the state of the first information.

In combination with some embodiments of the second aspect, in some embodiments, the indication information further includes information of at least one cell, and the indication information is configured for the terminal to determine at least one of: a state of the first information in the at least one cell.

In combination with some embodiments of the second aspect, in some embodiments, the indication information is further configured for the terminal to determine an effective time of the state, or the effective time is determined based on a predefined manner.

In a third aspect, embodiments of the present disclosure provide an information receiving apparatus, including: a receiving module, configured to receive indication information sent by a network device, wherein the indication information is configured for the terminal to determine a state of first information, wherein the state includes at least one of on-demand, or non on-demand.

In a fourth aspect, embodiments of the present disclosure provide an information sending apparatus, including: a sending module, configured to send indication information to a terminal, wherein the indication information is configured for the terminal to determine a state of first information, wherein the state includes at least one of on-demand, or non on-demand.

In a fifth aspect, embodiments of the present disclosure provide an information sending method, including: sending indication information by a network device to a terminal; and determining by the terminal, a state of first information according to the indication information, wherein the state includes at least one of on-demand, or non on-demand.

In a sixth aspect, embodiments of the present disclosure provide a terminal, including one or more processor, wherein the terminal is configured to implement the information receiving method described in the first aspect or any of optional embodiments of the first aspect.

In a seventh aspect, embodiments of the present disclosure provide a network device, including one or more processor, wherein the network device is configured to implement the information sending method described in the second aspect or any of optional embodiments of the second aspect.

In an eighth aspect, embodiments of the present disclosure provide a communication system, including a terminal and a network device. The terminal is configured to implement the information receiving method described in the first aspect or any of optional embodiments of the first aspect, and the network device is configured to implement the information sending method described in the second aspect or any of optional embodiments of the second aspect.

In a ninth aspect, embodiments of the present disclosure provide a storage medium storing instructions that, when executed on a communication device, cause the communication device to implement the information receiving method described in the first aspect or any of optional embodiments of the first aspect, and/or the information sending method described in the second aspect or any of optional embodiments of the second aspect.

In a tenth aspect, embodiments of the present disclosure provide a program product that, when executed by a communication device, causes the communication device to implement the information receiving method described in the first aspect or any of optional embodiments of the first aspect, and/or the information sending method described in the second aspect or any of optional embodiments of the second aspect.

In an eleventh aspect, embodiments of the present disclosure provide a computer program that, when running on a computer, causes the computer to implement the information receiving method described in the first aspect or any of optional embodiments of the first aspect, and/or the information sending method described in the second aspect or any of optional embodiments of the second aspect.

It may be understood that the information receiving apparatus, the information sending apparatus, the communication device, the communication system, the storage medium, the program product, and the computer program are all used to implement the method in embodiments of the present disclosure. Therefore, for beneficial effects that may be achieved reference may be made to the beneficial effects in a corresponding method, which will not be repeated here.

Embodiments of the present disclosure provide an information receiving method and apparatus, an information sending method and apparatus, a terminal, a network device, and a storage medium. In some embodiments, terms such as information receiving method, information sending method, information processing method and communication method may be used interchangeably, terms such as information receiving apparatus, information sending apparatus, information processing apparatus and communication device may be used interchangeably, and terms such as communication system and information processing system may be used interchangeably.

Embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In the embodiments of the present disclosure, unless otherwise specified, elements represented in singular form, such as "one", "a", "this", "the above", "said", "the aforementioned", etc., may represent "one and only one", "one or more", or "at least one", etc.

For example, in English, when using articles such as "a", "an", "the", the noun after the article can be understood as a singular or plural expression.

In the embodiments of the present disclosure, "a plurality of (multiple)" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words.

For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, "including A", "comprising A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "device" and "apparatus" may be interpreted as either physical or virtual. Names are not limited to those used in embodiments. In some cases, they may be understood as "equipment", "device", "circuit", "network element", "node", "function", "unit", "section", "system", "network", "chip", "chip system", "entity", "subject", etc.

In some embodiments, "network" may be interpreted as a device included in a network, for example, an access network device, a core network device, etc.

In some embodiments, the terms such as "access network device (AN device)", "radio access network device (RAN device)", "base station (BS)", "radio base station", "fixed station". In some embodiments, they may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, access network devices, core network devices, or network devices may be replaced with terminals. For example, the various embodiments disclosed herein can also be applied to the structure of replacing communication between access network devices, core network devices, or network devices and terminals with communication between multiple terminals (such as device to device (D2D), vehicle to everything (V2X), etc.). In this case, it can also be assumed that the terminal has all or part of the functions of the access network device. In addition, terms such as "uplink" and "downlink" can also be replaced with terms corresponding to communication between terminals (such as "side"). For example, the uplink and downlink channels can be replaced with sidelink channels, and the uplink and downlink can be replaced with sidelink.

In some embodiments, the terminal may be replaced with an access network device, a core network device, or a network device. In this case, it can also be assumed that the access network device, core network device, or network device has all or part of the functions possessed by the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

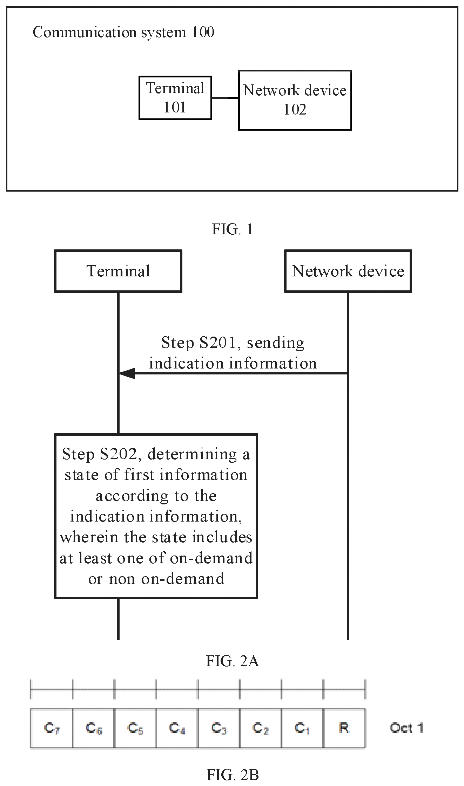

FIG. 1 is a schematic diagram of an architecture of a communication system according to embodiments of the present disclosure.

As shown in FIG. 1, the communication system 100 includes a terminal 101 and a network device 102. The network device 102 may include at least one of an access network device or a core network device.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the access network device may be, for example, a node or device that accesses the terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the network device may be a single device, including one or more network elements, or multiple devices or device groups, each including all or part of the aforementioned one or more network elements. Network elements may be virtual or physical. The core network includes at least one of Evolved Packet Core (EPC), 5G Core Network (5GCN), or Next Generation Core (NGC).

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

It may be understood that the communication system in embodiments of the present disclosure is to clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solution in embodiments of the disclosure is also applicable to similar technical problems.

The following embodiments of the present disclosure may be applied to the communication system 100 shown in FIG. 1, or to some entities, which are not limited herein. Entities in FIG. 1 are illustrative. The communication system may include all or some of the entities in FIG. 1, or may include other entities not shown in FIG. 1. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may be applied.

In some embodiments, the network device may send the first information to the terminal during communication, such as the System Information Block (SIB), physical downlink channel, reference signal, etc.

During this process, the network device may stop sending the first information to the terminal for some reasons. For example, for the stopped first information, the terminal requests the network device to send the first information before the network device sends the first information. In this case, the state of the first information may be called on-demand.

Alternatively, the network device may stop sending the first information to the terminal based on the communication situation in the cell. In this case, the state of the first information may be called on-demand.

It should be noted that the meaning of the first information being in an on-demand state is not limited to the network device sending the first information only when the terminal requests it.

In some embodiments, from the perspective of the network device, the first information being in an on-demand state may refer to the situation where the network device stops sending the first information to the terminal based on configuration of the first information although the network device has sent the configuration of the first information to the terminal, and the network device only continues to send the first information to the terminal based on the configuration after receiving a request from the terminal to send the first information; the first information being in a non on-demand state may refer to that the network device sends the configuration of the first information to the terminal and sends the first information to the terminal based on the configuration.

In some embodiments, from the perspective of the terminal, the first information being in an on-demand state may refer to the situation where the network device sends the configuration of the first information to the terminal, but the terminal has not received the first information from the network device based on the configuration, and in the case where the terminal needs to obtain the first information, the terminal sends a request message to the network device requesting the network device to send the first information; the first information being in a non on-demand state may refer to that the network device sends the configuration of the first information to the terminal, and the terminal can receive the first information based on this configuration.

In some embodiments, the way in which the network device sends the first information to terminal may vary based on the different first information, such as through broadcasting, multicast, multicast group, unicast, etc., which is not limited in this disclosure.

It can be seen that due to the fact that the first information may be in both on-demand and non on-demand states, some technical problems may arise when the terminal is not aware of the state of the first information. For example, after the first information enters the on-demand state, the terminal may not know that the first information has entered the on-demand state and still continue to attempt to receive the first information based on the configuration of the first information. However, since the first information is in the on-demand state, the network device stops sending the first information based on that configuration, and the terminal cannot receive the first information, which will cause unnecessary overhead to the terminal.

FIG. 2A is a schematic diagram of interaction in an information sending method according to an embodiment of the present disclosure.

As shown in FIG. 2A, the information receiving method includes the following steps.

At step S201, a network device sends indication information to a terminal.

In some embodiments, the indication information is configured for the terminal to determine a state of first information, wherein the state includes at least one of on-demand or non on-demand.

In some embodiments, the terminal receives the indication information sent by the network device.

At step S202, the terminal determines the state of the first information according to the indication information, wherein the state includes at least one of on-demand or non on-demand.

According to embodiments of the present disclosure, the terminal can determine the state of the first information based on the indication information sent by the network device, such as whether the first information is in an on-demand state or a non on-demand state. This helps avoid unnecessary operations by the terminal, thereby reducing unnecessary overhead.

For example, when the state of the first information changes from non on-demand to on-demand, the network device can send the indication information to the terminal to enable the terminal to determine that the state of the first information is on-demand.

When the terminal determines that the first information is in the on-demand state, it can stop receiving the first information based on the configuration of the first information and send request information to the network device to request the first information.

After receiving the request information, the network device sends an acknowledgment (ACK) to the terminal upon determining that the first information can be transmitted. Based on the ACK, the terminal can confirm that the network device will continue sending the first information, allowing it to proceed with receiving the first information according to the configuration.

For example, when the state of the first information changes from on-demand to non on-demand, the network device can send the indication information to the terminal to inform the terminal that the state of the first information is now non on-demand. Upon determining that the first information is in a non on-demand state, the terminal can continue to receive the first information based on the configuration of the first information.

In some embodiments, in addition to determining that the state of the first information changes from non on-demand to on-demand based on the indication information, the terminal can also determine this change through other means.

For example, the terminal determines that the state of the first information changes from non on-demand to on-demand based on a predefined manner.

If the terminal fails to receive the first information for a first duration in a case where the terminal receives the first information based on the configuration of the first information, it can be determined that the state of the first information has changed from non on-demand to on-demand. Here, the first duration may be set by the network device or agreed upon by the protocol.

In some embodiments, the starting position of the first duration may be any reception timing of the first information that has not been received, or the reception timing immediately preceding that timing, or q time domain units after the reception timing where the first information was not received. The length of the first duration may be p time domain units. Here, p and q may be configured by the network device or determined based on protocol agreements.

The time domain unit includes at least one of frame, subframe, slot, symbol, SSB cycle, DCI blind detection cycle, or paging cycle.

In some embodiments, the first information includes at least one of SSB (SS (Synchronization Signal) and PBCH (Physical downlink Broadcast Channel) Block) or SIB (System Information Block) 1.

It should be noted that the first information is not limited to the SSB and SIB1 mentioned above, and may also include other information such as Channel State Information Reference Signal (CSI-RS), Tracking Reference Signal (TRS), Physical Downlink Control Channel (PDCCH), Physical Downlink Shared Channel (PDSCH), and other newly defined signals such as the signal composed of primary and secondary synchronization signals, Discovery Reference Signal (DRS), etc.

In some embodiments, in a case where the first information includes SIB1, if the terminal has not received SIB1 in the current cell, the terminal can receive SIB1 according to the configuration of the SIB1; when the terminal has already received SIB1 in the current cell, the terminal will only receive SIB1 according to the configuration of SIB1 when it is determined that SIB1 needs to be updated. However, when SIB1 does not need to be updated, the terminal can pause receiving SIB1.

In some embodiments, in a case where the first information includes at least one of SSB and SIB1, the first information is relatively important information. In general, this first information will not enter the on-demand state. However, for certain reasons, for example, when the network device needs to enter the Network Energy Saving (NES) mode, the network device still can make the first information enter the on-demand state. In this case, the transmission of the first information can be stopped for energy-saving purposes, and thus the first information can enter the on-demand state.

Therefore, in some embodiments, the request information sent by the terminal to the network device for requesting the network device to send the first information, also known as the Wake Up signal (WUS), may be used to wake up the network device from the NES mode. After the network device is woken up from the NES mode, it may continue to send the first information. Of course, in some embodiments, the network device may also send the first information based on the request information when in the NES mode.

In some embodiments, when the first information is in an on-demand state, the terminal may send the request information to the network to request the first information to enter a non on-demand state, wherein the terminal may send the request information to the network device on the resources used to send the request information.

In some embodiments, in the case where the first information includes SIB1, if the terminal has not received SIB1 in the current cell, the terminal cannot obtain the frequency domain information corresponding to the initial uplink bandwidth part (BWP), and the terminal will not be able to be configured by the network device with resources of the request information in a conventional manner.

In this case, the resources of the request information can be determined based on a predefined manner. For example, the pattern corresponding to the resources of the request information is agreed upon by the protocol. For example, the protocol specifies multiple patterns corresponding to the resources of the request information. Although the terminal has not received SIB1, it can receive a Master Information Block (MIB). The terminal can determine a pattern from multiple patterns based on the information in the MIB (such as the PDCCH used to schedule SIB1 in the MIB, i.e. pdcch-ConfigSIB1) as the resources of the request information.

In some embodiments, the indication information includes at least one of a Radio Resource Control (RRC) signaling; Downlink Control Information (DCI).

Of course, the type of indication information is not limited to the RRC signaling and DCI mentioned above, the indication information may also be of other types, such as Media Access Control Element (MAC CE), which is not limited by this disclosure. The following embodiments mainly provide exemplary explanations of the technical solution of the present disclosure in the case where the indication information is the RRC signaling or DCI.

In some embodiments, the first information includes SSB, and the RRC signaling includes an information element (IE) used to indicate an index of the SSB.

In the case where the indication information is the RRC signaling, when the first information includes SSB, the RRC signaling may include an IE for indicating the index of the SSB, for example, the IE may be ssb-PositionsInBurst, which is used to indicate the index of the SSB actually sent in an SSB burst.

In some embodiments, all bits of the information element are 0, and the information element is configured for the terminal to determine the state of the SSB as on-demand, and/or at least one bit of the information element is not 0, and the information element is configured for the terminal to determine the state of the SSB as non on-demand.

For example, bits in the information element may be configured to indicate the index of the SSB actually sent in an SSB burst. When all bits in the information element are 0, the value of the information element is also 0, indicating that there is no SSB actually sent in the SSB burst. Based on this, the terminal can determine that the state of SSB is on-demand. When at least one bit in the information element is not 0, the value of the information element is also not 0, indicating that the SSB indexed by the value of the information element in the SSB burst will be sent, and the terminal can determine the state of the SSB as non on-demand based on this.

In some embodiments, for the ssb-PositionsInBurst configured in ServingCellConfigCommonSIB, ssb-PositionsInBurst may include at least one of two IEs: inOneGroup and groupPresence. When the bits of at least one of these two IEs are all 0, the terminal can determine that the state of SSB is on-demand. When at least one bit of at least one IE in these two IEs is not 0, the terminal can determine that the state of SSB is non on-demand.

In some embodiments, for the ssb-PositionsInBurst in ServingCellConfigCommon, ssb-PositionsInBurst may include at least one of three IEs: shortBitmap, medumBitmap, and longBitmap. When the bits in at least one of these three IEs are all 0, the terminal can determine the state of the SSB as on-demand. When at least one bit in at least one of these three IEs is not 0, the terminal can determine the state of the SSB as non on-demand.

In some embodiments, the indication information may include a signaling to trigger activation/deactivation of a secondary cell (SCell), such as:
MAC CE used to trigger SCell activation/deactivation, e.g. MAC CE Enhanced Scell Activation/Deactivation.

For example, if the corresponding MAC CE Enhanced Scell Activation/Deactivation indicates that the SCell is in an active state, the terminal determines that the state of the first information has changed. In this case, the terminal determines that the first information is non on-demand. For example, for SIB1, it can be determined that the network device broadcasts SIB1 based on the configuration information of SIB1.

For example, if the corresponding MAC CE Enhanced Scell Activation/Deactivation indicates that the SCell is in a deactive state, the terminal determines that the state of the first information has changed. In this case, the terminal determines that the first information is non on-demand. For example, for SIB1, it can be determined that the network device stops broadcasting SIB1 based on the configuration information of SIB1, and the network device will only continue broadcasting SIB1 based on the configuration information of SIB1 after receiving the request information sent by the terminal.

For example, the legacy SCell activation or deactivation signaling, e.g., MAC CE and RRC, includes or more of the following.

SCell activation or deactivation MAC CE, e.g., SCell Activation/Deactivation MAC CE:
As an example, the corresponding LCID index may be equal to 58, used for a MAC CE corresponding to one octet, which is a fixed size. The exemplary structure is shown in FIG. 2B.

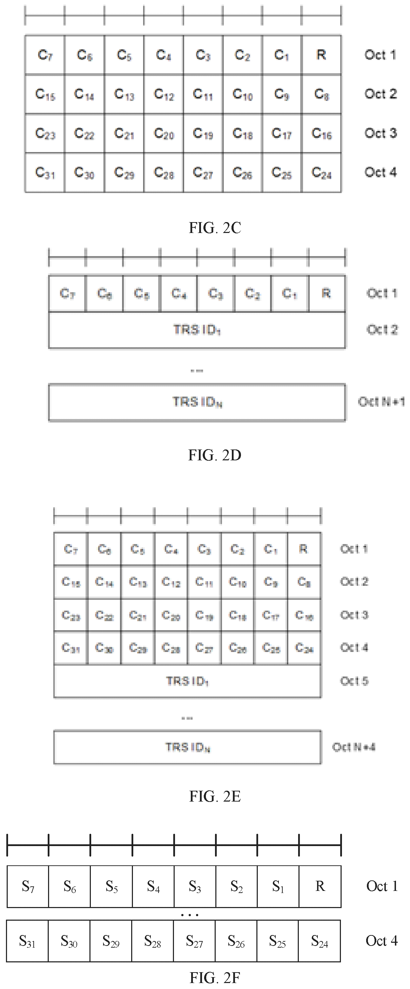

As an example, the corresponding LCID index may be equal to 57, used for a MAC CE corresponding to four octets, which is a fixed size. The exemplary structure is shown in FIG. 2C.

The meaning of the information fields in the MAC CE mentioned above is as follows.

Ci corresponds to a secondary cell index (ScellIndex). For example, the index may be configured based on RRC signaling e.g., *SCellIndex*; Enhanced SCell Activation or Deactivation MAC CE: e.g., SCell Activation/Deactivation MAC CE:
the MAC CE corresponds to eLCID index=295, with variable size.
- Ci: If an SCell is configured for a MAC entity with secondary cell index i, this field indicates the activation or deactivation state of the SCell corresponding to cell index i. Otherwise, the MAC entity should ignore the Ci field. If the Ci field is set to 1, it indicates that the secondary cell corresponding to cell index i will be activated and includes the TRS IDj field for that secondary cell. If the Ci field is set to 0, it indicates that the secondary cell with cell index i will be deactivated and does not include the TRS ID field for that secondary cell;
- TRS IDj: If TRS IDj is set to a non-zero value, it indicates that the TRS corresponding to the specified secondary cell activation reference signal identifier (e.g., which can be configured based on scellActivationRSId) is activated. If TRS IDj is set to zero, it means that no TRS is used for the corresponding SCell;
- R: Reserved bit, set to 0.

The Enhanced SCell activation or deactivation MACE CE with one octet Ci field is as shown in FIG. 2D.

The Enhanced SCell activation or deactivation MAC CE with four octet Ci fields is as shown in FIG. 2E.

In addition to the MAC CE signaling, the activation/deactivation of the secondary cell may also be based on RRC signaling indication. For example, the RRC signaling may include one or more of the following: secondary cell deactivation timer signaling (e.g. *sCellDeactivatonTimer*), secondary cell state indication signaling (e.g. *sCellState*), secondary cell state indication signaling (e.g. *scg-State*), etc.

### Implementation 1:

The terminal 101 determines the transmission state of on-demand signals based on existing secondary cell activation or deactivation related signaling (e.g. Scell activation/deactivation signaling).

For example, if the related signaling indicates that the corresponding Scell is activated, the terminal 101 determines that the network device 102 is transmitting one or more of the on-demand signals.

For example, if the related signaling indicates that the corresponding Scell is deactivated, the terminal 101 determines that the network device 102 stops transmitting one or more of the on-demand signals.

### Implementation 2:

The terminal 101 determines the transmission state of on-demand signals based on the reserved filed in the existing secondary cell activation or deactivation related signaling, e.g., Scell activation/deactivation signaling.

### Implementation 2-1:

For example, the signaling may be the R field of a secondary cell activation or deactivation signaling (e.g. Scell activation/deactivation signaling) with an existing one octet or four octets structure, as shown in FIG. 2B or FIG. 2C.

For example, if the corresponding R field indicator is 1, the transmission state of the on-demand signals in the corresponding cell is activated. In this case, the terminal 101 determines that the network device 102 is transmitting one or more of the on-demand signals.

For example, if the corresponding R field indicator is 0, the transmission state of the on-demand signals in the corresponding cell is deactivated. In this case, the terminal 101 determines that the network device 102 stops transmitting one or more of the on-demand signals.

### Implementation 2-2:

As an example, the signaling may be the R field of the existing Enhanced SCell Activation/Deactivation MAC CE with the one octet or four octets structure, as shown in FIG. 2D or FIG. 2E.

For example, if the corresponding R field indicator is 1, the transmission state of the on-demand signals in the corresponding cell is activated. In this case, the terminal 101 determines that the network device 102 is transmitting one or more of the on-demand signals.

For example, if the corresponding R field indicator is 0, the transmission state of the on-demand signals in the corresponding cell is deactivated. In this case, the terminal 101 determines that the network device 102 stops transmitting one or more of the on-demand signals.

It should be noted that the terminal can determine the transmission state of the corresponding on-demand signal based on the indication information of R of any MAC CE mentioned above, which will not be elaborated in the present disclosure.

### Implementation 3:

The terminal 101 determines the triggering state of on-demand signals based on MAC CE indication signaling.

For example, LCID corresponding to the MAC CE is different from LCID or eLCID corresponding to the existing secondary cell activation or deactivation (e.g. Scell activation/deactivation signaling) MAC CE or Enhanced secondary cell activation or deactivation (e.g. Enhanced Scell activation/deactivation signaling) MAC CE.

As an example, the MAC CE may have a fixed size, for example, the MAC CE may occupy one octet, e.g., 8 bits. For example, the MAC CE may occupy four octets, e.g., 32 bits. For example, the MAC CE may occupy one octet and four octets respectively. As an example, MAC CEs of different sizes may correspond to the same or different LCID/eLCID.

As an example, the MAC CE may be of variable size.

As an example, the MAC CE may include one or more of the following information fields:
R: reserved bits;
TRS Idi: If the indication value of the corresponding indication field is not 0, the corresponding TRS i is activated. For example, the TRS i may be configured based on existing signaling, e.g., *scellActivationRS-Id*, or based on other signaling, which is not limited in the present disclosure;
Si: the transmission state of the on-demand signals corresponding to the associated cell. For example, the associated cell may be a cell with a cell index of i. For example, the cell index may be configured based on the existing signaling, e.g., *SCellIndex*, or may also be configured based on newly defined signaling, which is not limited in the present disclosure. If Si indicates 1, the terminal determines that the transmission state of the on-demand signals in the corresponding cell is activated. At this time, the terminal 101 determines that the network device 102 is transmitting one or more of the on-demand signals, and/or the TRS associated with the TRS IDi field (if configured) is included in the cell.

If Si indicates 0, the terminal determines that the transmission state of the on-demand signals in the corresponding cell is deactivated. At this time, the terminal 101 determines that the network device 102 stops transmitting one or more of the on-demand signals, and/or that no TRS is included in the cell.

Based on the above definition, taking MAC CE having a fixed size with a corresponding size of four octets as an example, one possible structure is shown in FIG. 2F.

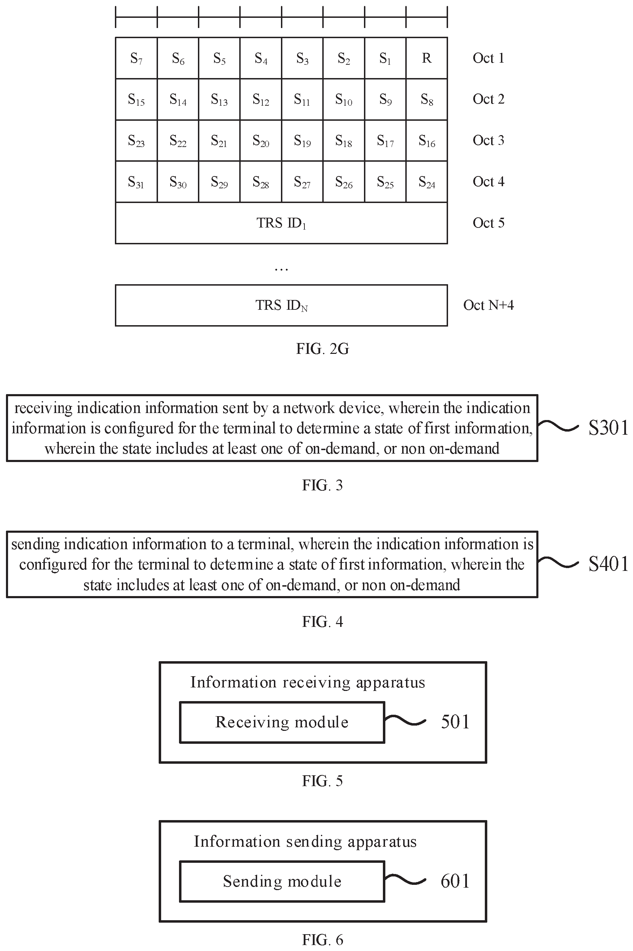

Based on the above definition, taking MAC CE having a variable size and containing TRS related information fields as an example, one possible structure is shown in FIG. 2G.

### Implementation 4:

The indication signaling is RRC or DCI.

As an example, the indication signaling may be transmitted based on the primary cell (Pcell) or Scell, which is not limited in the present disclosure.

As an example, the RRC may be a signaling carrying the wake up signal configuration (WUS configuration).

In some embodiments, the first information includes SIB1, the RRC signaling does not include a first search space on a first bandwidth part, the RRC signaling is configured for the terminal to determine the state of SIB1 as on-demand, and/or the RRC signaling includes the first search space on the first bandwidth part, the RRC signaling is configured for the terminal to determine the state of SIB1 as non on-demand.

In some embodiments, the first search space may include a search space for scheduling downlink control information (e.g. DCI 1_0) for SIB1, such as searchspaceSIB1.

When the terminal determines that the network device has not configured the first search space on the first BWP through RRC, the terminal can determine that the network device has not sent the configuration of SIB1, and the network device stops sending SIB1 based on the configuration. Therefore, the terminal cannot receive SIB1 based on configuration, and can determine that the state of SIB1 is on-demand.

When the terminal determines that the network device has configured the first search space on the first BWP through RRC, the terminal can determine that the network device has sent the configuration of SIB1, and the network device will send SIB1 based on the configuration. Thus, the terminal can receive SIB1 based on the configuration, and the terminal can determine that the state of SIB1 is non on-demand.

In some embodiments, the first BWP does not include at least one of:
an initial bandwidth part (initial BWP) where a control resource set CORESET#0 is located;
an active bandwidth part (active BWP) with a first parameter same as that of the initial bandwidth part and a frequency domain range including CORESET#0; or
an active bandwidth part in the initial bandwidth part.

In some embodiments, the first reference includes at least one of sub-carrier spacing (SCS), or cyclic prefix (CP).

In some embodiments, for the following situations: the first BWP is the initial BWP of CORESET#0, or the first BWP has the same first parameter as the initial BWP and the frequency domain range includes the active BWP of CORESET#0, or the first BWP includes the active bandwidth part in the initial bandwidth part, even if the network device does not configure the first search space on the first BWP through RRC, the terminal can determine the configuration of SIB1 through other means (e.g., based on pdcch-ConfigSIB1 in MIB). Therefore, for these situations, even if the network device does not configure the first search space on the first BWP through RRC, when the terminal determines the configuration of SIB1 through other means and receives the corresponding SIB based on the configuration, the terminal can still determine that the state of SIB is non on-demand.

In some embodiments, in the case where the first information includes the RRC signaling, the RRC signaling may be a legacy RRC signaling or a newly defined RRC signaling, where the newly defined RRC signaling is transparent to legacy terminals, that is, legacy terminals do not parse the newly defined RRC signaling. Therefore, it is advantageous to avoid the newly defined RRC signaling affecting the behavior of the legacy terminal when the newly defined RRC signaling is configured for the terminal to determine that the first information is in an on-demand or non on-demand state.

In some embodiments, the DCI includes at least one of legacy DCI; newly defined DCI; or legacy DCI scrambled with a newly defined Radio Network Temporary Identity (RNTI).

For example, the newly defined DCI may be DCI in a new format, such as DCI 2_10.

For example, the legacy DCI scrambled with the newly defined RNTI may be DCI 1_0, DCI 2_9, etc. The newly defined RNTI may be, for example, demand RNTI, on demand RNTI, etc.

In some embodiments, DCI may be configured with a Common Search Space (CSS) or based on a Terminal Specific Search Space (USS), which is not limited in the present disclosure.

In some embodiments, the legacy DCI includes at least one of:
first DCI scrambled with a system information radio network temporary identity (SI-RNTI); or
second DCI scrambled with a paging radio network temporary identity (P-RNTI).

In some embodiments, reserved bits in the legacy DCI are configured for the terminal to determine the state of the first information.

For example, the reserved bits in the DCI may indicate that the first information is in an on-demand state. For example, for SIB1, the terminal may determine that the network device stops broadcasting SIB1 based on configuration information of SIB1, according to the reserved bits in DCI. During the on-demand state of SIB1, the terminal may choose to stop receiving SIB1 based on the configuration information of SIB1. The network device will only continue broadcasting SIB1 based on configuration information of SIB1 after receiving the request information sent by the terminal.

For example, the reserved bits in the DCI may indicate that the first information is in a non on-demand state. For example, for SIB1, the terminal may determine that the network device broadcasts SIB1 based on the configuration information of SIB1, according to the reserved bits in DCI. When the terminal has not yet received SIB1 or determines that SIB1 needs to be updated, the terminal may receive SIB1 based on the configuration of SIB1.

For example, for the first DCI, there are reserved bits in the first DCI, and the number of reserved bits may vary depending on the DCI. For example, DCI 1_0 scrambled by SI-RNTI may have 17 reserved bits, and at least one of these reserved bits can be used to indicate to the terminal whether the first information is in an on-demand state or a non on-demand state.

In some embodiments, a short message indicator information field in the second DCI is configured to indicate paging scheduling, and the reserved bits include bits in the short message indicator information field; and/or, the short message indicator information field in the second DCI is configured to indicate short message scheduling, and the reserved bits include bits outside the short message indicator information field.

For example, for the second DCI, the short message indicator information field in the second DCI has two indication functions, one is to indicate paging scheduling and the other is to indicate short message scheduling.

When the short Message Indicator indicates paging scheduling, its role is relatively weak, so the bits in the short Message Indicator may be used as reserved bits.

When the short Message Indicator indicates short message scheduling, its role is relatively important. Therefore, the bits in the short Message Indicator cannot be used as reserved bits, but bits in the information field outside the short Message Indicator can be used as reserved bits. Moreover, the short message scheduling mainly involves the relevant content of PDCCH, and thus the bits in the information fields related to PDSCH in the second DCI, such as frequency domain resource assignment (FDRA) information field, time domain resource assignment (FDRA) information field, virtual resource block to physical resource block mapping (VRB to PRB mapping) information field, modulation and coding scheme (MCS) information field, redundancy version (RV) information field, transport block scale (TB scaling) information field, etc., can be used as reserved bits.

For example, for the second DCI, it has three indication functions, one is to indicate paging scheduling, one is to indicate short message scheduling, and one is to indicate the corresponding TRS function. The rules are similar to the above embodiments and will not be repeated here.

It should be noted that in some embodiments, the indication information may indicate not only the state of the first information, but also information content. The following examples will be used to illustrate this.

In some embodiments, the indication information further includes information of at least one cell, and the indication information is configured for the terminal to determine at least one of the state of the first information in the at least one cell.

For example, the network device may also indicate information about at least one cell, such as the cell ID, through the indication information. The terminal can determine the state of the first information in the cell based on the cell indicated by the indication information and the state of the first information indicated by the indication information. Based on this, cross cell (or cross carrier) indication of the state of the first information can be achieved, which is beneficial for improving the flexibility of indication operations.

At least one cell may include the cell where the terminal is currently located (such as the cell used to receive DCI), or may also include neighboring cells of the cell where the terminal is currently located, the primary cell and secondary cell that the terminal accesses, etc.

It should be noted that the indication information may indicate not only the information of at least one cell, but also other effective granularity information, such as bandwidth part information, beam information, SSB index information, etc.

For example, the terminal can determine the BWP where the state of the first information indicated by the indication information is effective, based on the bandwidth part information indicated by the indication information. For example, the terminal can determine the beam where the state of the first information indicated by the indication information is effective, based on the beam information indicated by the indication information. For example, the terminal can determine the beam where the state of the first information indicated by the indication information is effective (such as, corresponding to the SSB index information), based on the SSB index information indicated by the indication information.

In some embodiments, the indication information is also configured for the terminal to determine an effective time of the state, or the effective time is determined based on a predefined manner.

In some embodiments, the indication information may also indicate the effective time of the state when indicating the state of the first information. Of course, the effective time is not limited to being determined based on the indication information, but may also be determined based on predefined manners.

For example, in the case where the indication information indicates that the first information is in an on-demand state and the effective time is T1, if the terminal needs to obtain the first information within T1, the terminal can send a request to the network device to request the network device to send the first information. Since the first information is in a non on-demand state outside T1, for example, for SIB1, the network device will continue to broadcast SIB1, and then the terminal can receive SIB based on its configuration information outside the first time range.

In some embodiments, the effective time may be determined based on one of starting time or duration.

At least one of the starting time or duration may be indicated by the indication information, and at least one of the starting time or duration may be determined based on the protocol agreement.

For example, in the case where the starting time is determined based on a protocol agreement, the starting time includes at least one of:
a time domain unit where the indication information is located;
a starting position of a next SSB cycle of the time domain unit where the indication information is located; or
a starting position of a next Type 0 CSS cycle of the time domain unit where the indication information is located.

The time domain unit includes at least one of frame, subframe, slot, symbol, SSB cycle, blind detection cycle of DCI, or paging cycle.

In the case where the duration is determined based on the protocol agreement, the duration includes at least one of:
a first number of SSB cycles, where the SSB cycle is configured by the network device or predefined (for example, predetermined as 20 milliseconds);
a second number of Type 0 CSS cycles, where the Type 0 CSS cycle is configured by the network device or predefined (for example, predetermined as 20 milliseconds).

The first number and the second number may be configured by the network device or determined based on protocol agreements, which is not limited in this disclosure.

For example, in the case where the first information is the first DCI, if the effective time is determined based on the protocol agreement, the effective time includes at least one of:
the first SSB cycle after the time domain unit where the first DCI is located;
the blind detection cycle of the first DCI after the time domain unit where the first DCI is located; or
a maximum value between the two effective times mentioned above.

For example, in the case where the first information is the second DCI, if the effective time is determined based on the protocol agreement, the effective time includes at least one of:
the first SSB cycle after the time domain unit where the second DCI is located;
the blind detection cycle of the first second DCI after the time domain unit where the second DCI is located;
the first paging cycle after the time domain unit where the second DCI is located;
the first paging frame (PF) after the time domain unit where the second DCI is located;
the first paging occasion (PO) after the time domain unit where the second DCI is located; or
a maximum value among the five effective times mentioned above.

The communication method involved in embodiments of the present disclosure may include at least one of steps S201-S202. For example, step S201 may be implemented as an independent embodiment, step S202 may be implemented as an independent embodiment, and steps S201+S202 may be implemented as an independent embodiment, but not limited to these.

In some embodiments, steps S201 and S202 may be executed in an alternating order or simultaneously.

In some embodiments, step S201 is optional, and one or more of these steps may be omitted or replaced in different embodiments.

In some embodiments, step S202 is optional, and one or more of these steps may be omitted or replaced in different embodiments.

In some embodiments, reference can be made to other alternative implementations described before or after the specification corresponding to FIG. 2A.

In a first aspect, embodiments of the present disclosure provide an information receiving method. FIG. 3 is a schematic flowchart of an information receiving method according to an embodiment of the present disclosure. The information receiving method shown in this embodiment may be performed by a terminal.

As shown in FIG. 3, the information receiving method may include the following steps.

At step S301, indication information sent by a network device is received, wherein the indication information is configured for the terminal to determine a state of first information, wherein the state includes at least one of on-demand or non on-demand.

It should be noted that the embodiment shown in FIG. 3 may be implemented independently or in combination with at least one other embodiment in the present disclosure, depending on specific needs, which is not limited in the present disclosure.

In some embodiments, the first information includes at least one of: synchronization signal and physical down broadcast channel block (SSB); or system information block (SIB) 1.

In some embodiments, the indication information includes at least one of: a radio resource control (RRC) signaling; or downlink control information (DCI).

In some embodiments, the first information includes SSB, and the RRC signaling includes an information element indicating an SSB index.

In some embodiments, bits in the information element are all 0, and the information element is configured for the terminal to determine a state of the SSB as on-demand; and/or, at least one bit in the information element is not 0, and the information element is configured for the terminal to determine a state of the SSB as non on-demand.

In some embodiments, the first information includes SIB1, the RRC signaling does not include a first search space on a first bandwidth part, and the RRC signaling is configured for the terminal to determine a state of the SIB1 as on-demand; and/or, the RRC signaling includes a first search space on a first bandwidth part, and the RRC signaling is configured for the terminal to determine a state of the SIB1 as non on-demand.

In some embodiments, the first bandwidth part does not include at least one of: an initial bandwidth part where a control resource set CORESET#0 is located; an active bandwidth part with a first parameter same as that of the initial bandwidth part and a frequency domain range comprising CORESET#0; or an active bandwidth part in the initial bandwidth part.

In some embodiments, the DCI includes at least one of: legacy DCI; newly defined DCI; or legacy DCI scrambled with a newly defined radio network temporary identity.

In some embodiments, the legacy DCI includes at least one of: first DCI scrambled with a system information radio network temporary identity (SI-RNTI); or second DCI scrambled with a paging radio network temporary identity (P-RNTI).

In some embodiments, reserved bits in the legacy DCI are configured for the terminal to determine the state of the first information.

In some embodiments, a short message indicator information field in the second DCI is configured to indicate paging scheduling, and the reserved bits include bits in the short message indicator information field; and/or, a short message indicator information field in the second DCI is configured to indicate short message scheduling, and the reserved bits include bits outside the short message indicator information field.

In some embodiments, the indication information further includes information of at least one cell, and the indication information is configured for the terminal to determine at least one of: a state of the first information in the at least one cell.

In some embodiments, the indication information is further configured for the terminal to determine an effective time of the state, or the effective time is determined based on a predefined manner.

For the first aspect, optional implementations of optional embodiments under the first aspect, reference can be made to the optional implementations in the embodiment shown in FIG. 2A and other related sections involved in the embodiment of FIG. 2A, which will not be reiterated here.

In a second aspect, embodiments of the present disclosure provide an information sending method.

FIG. 4 is a schematic flowchart of an information sending method according to an embodiment of the present disclosure. The information sending method shown in this embodiment may be performed by a network device.

As shown in FIG. 4, the information sending method may include the following steps.

At step S401, indication information is sent to a terminal, wherein the indication information is configured for the terminal to determine a state of first information, wherein the state includes at least one of on-demand or non on-demand.

In some embodiments, the first information includes at least one of: synchronization signal and physical down broadcast channel block (SSB); or system information block (SIB) 1.

In some embodiments, the indication information includes at least one of: a radio resource control (RRC) signaling; or downlink control information (DCI).

In some embodiments, the first information includes SSB, and the RRC signaling includes an information element indicating an SSB index.

In some embodiments, bits in the information element are all 0, and the information element is configured for the terminal to determine a state of the SSB as on-demand; and/or, at least one bit in the information element is not 0, and the information element is configured for the terminal to determine a state of the SSB as non on-demand.

In some embodiments, the first information includes SIB1, the RRC signaling does not include a first search space on a first bandwidth part, and the RRC signaling is configured for the terminal to determine a state of the SIB1 as on-demand; and/or, the RRC signaling includes a first search space on a first bandwidth part, and the RRC signaling is configured for the terminal to determine a state of the SIB1 as non on-demand.

In some embodiments, the first bandwidth part does not include at least one of: an initial bandwidth part where a control resource set CORESET#0 is located; an active bandwidth part with a first parameter same as that of the initial bandwidth part and a frequency domain range comprising CORESET#0; or an active bandwidth part in the initial bandwidth part.

In some embodiments, the DCI includes at least one of: legacy DCI; newly defined DCI; or legacy DCI scrambled with a newly defined radio network temporary identity.

In some embodiments, the legacy DCI includes at least one of: first DCI scrambled with a system information radio network temporary identity (SI-RNTI); or second DCI scrambled with a paging radio network temporary identity (P-RNTI).

In some embodiments, reserved bits in the legacy DCI are configured for the terminal to determine the state of the first information.

In some embodiments, a short message indicator information field in the second DCI is configured to indicate paging scheduling, and the reserved bits include bits in the short message indicator information field; and/or, a short message indicator information field in the second DCI is configured to indicate short message scheduling, and the reserved bits include bits outside the short message indicator information field.

In some embodiments, the indication information further includes information of at least one cell, and the indication information is configured for the terminal to determine at least one of: a state of the first information in the at least one cell.

In some embodiments, the indication information is further configured for the terminal to determine an effective time of the state, or the effective time is determined based on a predefined manner.

The following provides exemplary explanations of the technical solution of the present disclosure through several embodiments.

Embodiment 1: The base station (for example, the network device includes the base station) implements state indication of the first information based on the existing designed RRC signaling, and the first information may be, for example, SIB, SSB, etc.

In Embodiment 1.1, for SSB, the RRC signaling may include ssb-PositionsInBurst. For the ssb-PositionsInBurst configured in ServingCellConfigCommonSIB, the corresponding signaling is as follows:

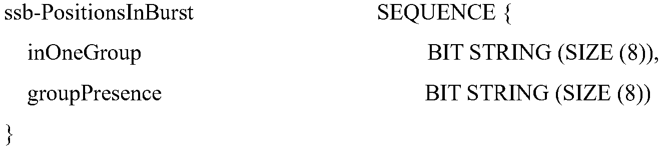

For example, if all the bit indication values in the inOneGroup IE and/or groupPresence IE are 0, it indicates that the corresponding base station will no longer send the corresponding SSB. On the contrary, if the bit indication values in the inOneGroup IE and/or groupPresence IE are not all 0, it indicates that the corresponding base station continues to send the corresponding SSB.

From the perspective of the terminal, if all the bit indication values in the inOneGroup IE and/or groupPresence IE in the corresponding received signaling are 0, the terminal determines not to receive SSB anymore. On the contrary, if the bit indication values in the inOneGroup IE and/or groupPresence IE are not all 0, the terminal will continue to receive the corresponding SSB.

Corresponding to the ssb-PositionsInBurst configured in ServingCellConfigCommon, the signaling is as follows:

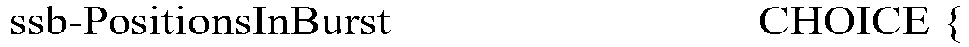

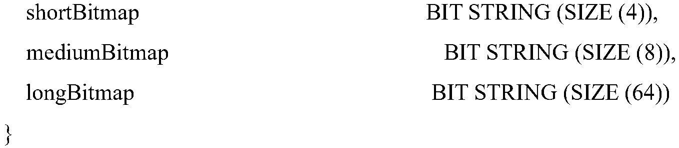

For example, if all the bit indication values in the IE shortBitmap and/or mediumBitmap and/or longBitmap are 0, it indicates that the corresponding base station will no longer send the corresponding SSB. On the contrary, if not all the bit indication values in the IE shortBitmap and/or mediumBitmap and/or longBitmap are 0, it indicates that the corresponding base station continues to send the corresponding SSB.

From the perspective of the terminal, if all the bit indication values in the IE shortBitmap and/or mediamBitmap and/or longBitmap in the received indication signaling are 0, the terminal determines not to receive SSB anymore. On the contrary, if not all the bit indication values in the IE shortBitmap and/or mediumBitmap and/or longBitmap are 0, the terminal continues to receive the corresponding SSB.

In Embodiment 1.2, for SIB1, the RRC signaling may be searchspaceSIB1 signaling. Except for the initial BWP where CORESET#0 is located, and/or the active BWP that meets the following conditions: the SCS and CP lengths are the same as those of the initial DL BWP, and the frequency domain range where the active DL BWP is located includes CORESET0, or the active BWP on the initial DL BWP, if the base station does not configure searchspaceSIB1 on the corresponding BWP, the base station will abandon the transmission of the corresponding SIB1. On the contrary, if the base station configures searchspaceSIB1 on the corresponding BWP through RRC signaling reconfiguration, the base station will transmit the corresponding SIB1.

From the perspective of the terminal, if the terminal receives the searchspaceSIB1 configuration on the corresponding BWP, the terminal will blindly detect the corresponding DCI based on the searchspace configuration. If the corresponding DCI is detected, the terminal will receive the corresponding SIB1 based on DCI scheduling.

In Embodiment 1.3, the corresponding RRC signaling for Embodiments 1.1 and 1.2 may be existing signaling, or may also be newly defined RRC signaling other than the existing signaling. The main motivation for introducing the newly defined RRC signaling is that the RRC signaling is a cell level common signaling. If there are legacy UEs in the cell, the newly defined RRC signaling is transparent to the legacy UEs and will not affect the corresponding behavior of the legacy UE.

In Embodiment 1.4, in addition to the on-demand SSB/SIB1 state indication defined in the above embodiments, this embodiment mainly designs a mechanism to determine the effective time window of on-demand SSB/SIB1, that is, the time window during which the base station does not send SSB/SIB1, and/or the time window during which the base station sends SSB/SIB1, corresponding to the time window during which the terminal does not receive SSB/SIB1, and/or the time window during which the terminal receives SSB/SIB1.

The time window may be determined based on signaling indication or predefined manners. For example, the effective window is determined based on one or more of the following manners.

The effective window starts from the time when the signaling is transmitted.

The effective window starts from the starting position of the next SSB cycle of where the signaling is located.

The effective window starts from the starting position of the next Type 0 CSS cycle of where the signaling is located.

The length of the effective window is equal to N SSB cycles, wherein the SSB cycle is configured based on signaling or is a default cycle (e.g. 20ms).

The length of the effective window is equal to M Type 0 CSS blind detection cycles, wherein the blind detection cycle is configured based on signaling or a default cycle (e.g. 20ms).

Based on the above Embodiment 1, the terminal supporting network energy saving receives indication signaling and determines the state of the corresponding on demand signal. Moreover, based on predefined manners or indication signaling, the terminal determines the effective window, and receives/does not receive the corresponding first information (such as SSB, SIB1, etc.) within the effective window.

Embodiment 2: The base station (for example, the network device includes the base station) re-farms the existing DCI to achieve state indication of the on-demand SSB/SIB1. Correspondingly, UE that supports on-demand SSB/SIB1 characteristics can achieve the state indication of the first information based on the re-farmed information field when receiving the corresponding DCI. The first information may be, for example, SIB, SSB, etc.

Embodiment 2.1: for example, the base station indicates the state of the corresponding on-demand SSB/SIB1 based on SI-RNTI scrambled DCI 1_0. The DCI may include one or more of the following information fields:
an information field corresponding to the transmission state of SSB: for example, no longer transmitting the corresponding SSB, or continuing to transmit the corresponding SSB;
an information field corresponding to the transmission state of SIB1: for example, no longer transmitting corresponding SIB1, or continuing to transmit corresponding SIB1;
an information field corresponding to the effective window starting position (offset) of the transmission state: for example, the terminal determines the starting position of the corresponding time window based on the time unit where the DCI is received and the offset indication. The offset is measured in time units as the granularity, such as frames, subframes, slots, symbols, SSB cycles, Type0 CSS blind detection cycles, etc;
an information field corresponding to a duration of the transmission state: as an example, the duration is measured in time units as the granularity, which are based on the above definition and will not be repeated here;
an information field corresponding to the cell/BWP/SSB index/beam where the transmission state is effective: for example, the information field may be used for the cell, BWP, SSB index, and beam to which the DCI indication information is applied.

As an example, the information field or information may be carried based on reserved bits of DCI 1_0 scrambled by SI-RNIT, with an exemplary reserved bits of 17 bits.

For example, the corresponding effective time may also be determined based on predefined manners, and the effective time may be determined based on at least one of:
cycle 1: the first SSB cycle after receiving the DCI;
cycle 2: the first blind detection cycle of DCI 1_0 scrambled by SI-RNTI after receiving the DCI; or. The
a maximum value of cycle 1 and cycle 2.

Embodiment 2.2: for example, the base station indicates the state of the first information based on DCI 1_0 scrambled by P-RNTI. The DCI may include one or more of the following information fields:
an information field corresponding to the transmission state of SSB: for example, no longer transmitting the corresponding SSB, or continuing to transmit the corresponding SSB;
an information field corresponding to the transmission state of SIB1: for example, no longer transmitting corresponding SIB1, or continuing to transmit corresponding SIB1;
an information field corresponding to the effective window starting position (offset) of the transmission state: for example, the terminal determines the starting position of the corresponding time window based on the time unit where the DCI is received and the offset indication. The offset is measured in time units as the granularity, such as frames, subframes, slots, symbols, SSB cycles, blind detection cycles corresponding to the DCI, paging cycles, etc;
an information field corresponding to a duration of the transmission state: as an example, the duration is measured in time units as the granularity, which are based on the above definition and will not be repeated here;
an information field corresponding to the cell/BWP/SSB index/beam where the transmission state is effective: for example, the information field may be used for the cell, BWP, SSB index, and beam to which the DCI indication information is applied.

As an example, the information field or information may be carried based on reserved bits of DCI 1_0 scrambled by P-RNIT. For example, in DCI 1-0, the short Message Indicator is only used to indicate paging information scheduling, and the reserved field is the short Message field. For example, in DCI 1_0, the short Message Indicator is only used to indicate the information scheduling of short message, and the reserved field is one or more of: FDRA field, TDRA field, VRB-to-PRB mapping field, MCS field, RV field, or TB scaling field.

Embodiment 2.3: for example, the base station uses DCI of a new format, such as DCI format 2_10, or DCI scrambled with a new RNRI, such as DCI 1_0 scrambled with demand-RNTI, or DCI 2_9, to indicate information about on-demand SSB and/or on-demand SIB1.

The DCI may be configured based on CSS or based on USS.

The DCI may contain indication information of one cell, such as the cell where the DCI is sent, or information indicating the cell ID, or may contain indication information of multiple cells.

In addition to the information of the cell ID, the information fields contained in the DCI are similar to those in Embodiments 2.1 and 2.2, and will not be repeated here.

Embodiment 2.4: After receiving the DCI indication information and determining the state of the on demand signal, the terminal may also determine the effective time of the DCI, that is, the effective time of the state of the on demand signal. As an example, the corresponding effective time may also be determined based on signaling indications or predefined manners, and the effective time may be determined based on at least one of:
cycle 1: the first SSB cycle after receiving the DCI;
cycle 2: the first blind detection cycle of the DCI 1_0 scrambled with P-RNTI after receiving the DCI;
cycle 3: the first paging cycle/the next PF/PO after receiving the DCI; or
a maximum value of cycle 1, cycle 2, and cycle 3.

Based on this Embodiment 2, the terminal supporting network energy saving receives the indication signaling and determines the state of the corresponding on demand signal. Moreover, based on predefined manners or indication signaling, the terminal determines the effective time and effective window, and receives/does not receive the corresponding SSB/SIB1 within the effective window.

Based on Embodiment 1 or Embodiment 2, embodiments of the present disclosure mainly design relevant signaling indication methods to indicate the state of the corresponding on-demand signal, which is beneficial for achieving energy efficiency in the network while ensuring consistency in understanding between base stations and terminals.

In some embodiments, names of information are not limited to those specified in embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "up", "uplink", and "physical uplink" may be interchangeable with each other, terms such as "down", "downlink", and "physical downlink" may be interchangeable with each other, and terms such as "side", "sidelink", "side communication", "sidelink communication", "direct connection", "direct link", and "direct link communication" may be interchangeable with each other.

In some embodiments, terms such as "downlink control information (DCI)", "downlink (DL) assignment", "DL DCI", "uplink (UL) grant", and "UL DCI" may be used interchangeably.

In some embodiments, terms such as "physical downlink shared channel (PDSCH)", and "DL data" may be used interchangeably, and terms such as "physical uplink shared channel (PUSCH)", and "UL data" may be used interchangeably
In some embodiments, terms such as "synchronization signal (SS)", "synchronization signal block (SSB)", "reference signal (RS)", "pilot", and "pilot signal" may be interchangeable with each other.

In some embodiments, terms such as "moment", "time point", "time", "time position", etc. may be interchangeable with each other, and terms such as "duration", "time period", "time window", "window", "time", etc. may be interchangeable with each other.

In some embodiments, terms such as "component carrier (CC)", "cell", "frequency carrier", "carrier frequency", etc. may be interchangeable with each other.

In some embodiments, terms such as "resource block (RB)", "physical resource block (PRB)", "sub-carrier group (SCG)", "resource element group (REG)", "PRB pair", "RB pair", "resource element (RE)", "sub-carrier", etc. may be interchangeable with each other.

In some embodiments, terms such as "frame", "radio frame", "subframe", "slot", "sub-slot", "mini-slot", "symbol", "transmission time interval (TTI)", etc. may be interchangeable with each other.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "transmit", "report", "deliver", "transmit", "bidirectional transmission", "send and/or receive", etc., may be used interchangeably.

Corresponding to the embodiments of the information receiving method and the information sending method described above, this disclosure also provides embodiments of an information receiving apparatus and an information sending apparatus.

FIG. 5 is a schematic block diagram of an information receiving apparatus according to an embodiment of the present disclosure. As shown in FIG. 5, the information receiving apparatus includes a receiving module 501.

In some embodiments, the receiving module is configured to receive indication information sent by a network device, wherein the indication information is configured for the terminal to determine a state of first information, wherein the state includes at least one of on-demand or non on-demand.

In some embodiments, the first information includes at least one of: synchronization signal and physical down broadcast channel block (SSB); or system information block (SIB) 1.

In some embodiments, the indication information includes at least one of: a radio resource control (RRC) signaling; or downlink control information (DCI).

In some embodiments, the first information includes SSB, and the RRC signaling includes an information element indicating an SSB index.

In some embodiments, bits in the information element are all 0, and the information element is configured for the terminal to determine a state of the SSB as on-demand; and/or, at least one bit in the information element is not 0, and the information element is configured for the terminal to determine a state of the SSB as non on-demand.

In some embodiments, the first information includes SIB1, the RRC signaling does not include a first search space on a first bandwidth part, and the RRC signaling is configured for the terminal to determine a state of the SIB1 as on-demand; and/or, the RRC signaling includes a first search space on a first bandwidth part, and the RRC signaling is configured for the terminal to determine a state of the SIB1 as non on-demand.

In some embodiments, the first bandwidth part does not include at least one of: an initial bandwidth part where a control resource set CORESET#0 is located; an active bandwidth part with a first parameter same as that of the initial bandwidth part and a frequency domain range comprising CORESET#0; or an active bandwidth part in the initial bandwidth part.

In some embodiments, the DCI includes at least one of: legacy DCI; newly defined DCI; or legacy DCI scrambled with a newly defined radio network temporary identity.

In some embodiments, the legacy DCI includes at least one of: first DCI scrambled with a system information radio network temporary identity (SI-RNTI); or second DCI scrambled with a paging radio network temporary identity (P-RNTI).

In some embodiments, reserved bits in the legacy DCI are configured for the terminal to determine the state of the first information.

In some embodiments, a short message indicator information field in the second DCI is configured to indicate paging scheduling, and the reserved bits include bits in the short message indicator information field; and/or, a short message indicator information field in the second DCI is configured to indicate short message scheduling, and the reserved bits include bits outside the short message indicator information field.

In some embodiments, the indication information further includes information of at least one cell, and the indication information is configured for the terminal to determine at least one of: a state of the first information in the at least one cell.

In some embodiments, the indication information is further configured for the terminal to determine an effective time of the state, or the effective time is determined based on a predefined manner.

FIG. 6 is a schematic block diagram of an information sending apparatus according to an embodiment of the present disclosure. As shown in FIG. 6, the information sending apparatus includes a sending module 601.

In some embodiments, the sending module is configured to send indication information to a terminal, wherein the indication information is configured for the terminal to determine a state of first information, wherein the state includes at least one of on-demand or non on-demand.

In some embodiments, the first information includes at least one of: synchronization signal and physical down broadcast channel block (SSB); or system information block (SIB) 1.

In some embodiments, the indication information includes at least one of: a radio resource control (RRC) signaling; or downlink control information (DCI).

In some embodiments, the first information includes SSB, and the RRC signaling includes an information element indicating an SSB index.

In some embodiments, bits in the information element are all 0, and the information element is configured for the terminal to determine a state of the SSB as on-demand; and/or, at least one bit in the information element is not 0, and the information element is configured for the terminal to determine a state of the SSB as non on-demand.

In some embodiments, the first information includes SIB1, the RRC signaling does not include a first search space on a first bandwidth part, and the RRC signaling is configured for the terminal to determine a state of the SIB1 as on-demand; and/or, the RRC signaling includes a first search space on a first bandwidth part, and the RRC signaling is configured for the terminal to determine a state of the SIB1 as non on-demand.

In some embodiments, the first bandwidth part does not include at least one of: an initial bandwidth part where a control resource set CORESET#0 is located; an active bandwidth part with a first parameter same as that of the initial bandwidth part and a frequency domain range comprising CORESET#0; or an active bandwidth part in the initial bandwidth part.

In some embodiments, the DCI includes at least one of: legacy DCI; newly defined DCI; or legacy DCI scrambled with a newly defined radio network temporary identity.

In some embodiments, the legacy DCI includes at least one of: first DCI scrambled with a system information radio network temporary identity (SI-RNTI); or second DCI scrambled with a paging radio network temporary identity (P-RNTI).

In some embodiments, reserved bits in the legacy DCI are configured for the terminal to determine the state of the first information.

In some embodiments, a short message indicator information field in the second DCI is configured to indicate paging scheduling, and the reserved bits include bits in the short message indicator information field; and/or, a short message indicator information field in the second DCI is configured to indicate short message scheduling, and the reserved bits include bits outside the short message indicator information field.

In some embodiments, the indication information further includes information of at least one cell, and the indication information is configured for the terminal to determine at least one of: a state of the first information in the at least one cell.

In some embodiments, the indication information is further configured for the terminal to determine an effective time of the state, or the effective time is determined based on a predefined manner.

For apparatus embodiments, as they basically correspond to the method embodiments, please refer to the partial description of the method embodiments for relevant information. The above described embodiments of the apparatuses are only illustrative, where the modules described as separate components may or may not be physically separated, and the components displayed as modules may or may not be physical modules, that is, they may be located in one place or distributed across multiple network modules. Some or all of the modules can be selected according to actual needs to achieve the purpose of this embodiment. Ordinary technical personnel in this field can understand and implement without putting in creative labor.

Embodiments of the disclosure also provide an apparatus for implementing any one of the above methods. For example, an apparatus is provided, including units for performing the steps executed by the terminal in any one of the above methods. Further, another apparatus is provided, including units or modules for performing the steps executed by the network device (for example, the access network device, the core network function node, the core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

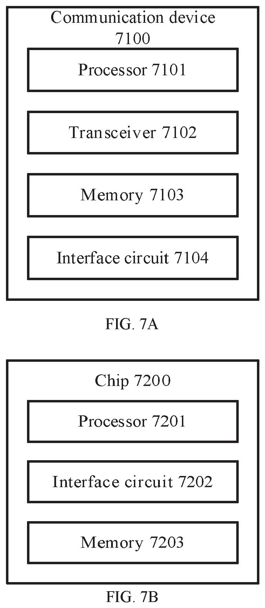

FIG. 7A is a block diagram of a communication device 7100 according to embodiments of the present disclosure. The communication device 7100 may be a network device (for example, an access network device, a core network device, etc.), or may be a terminal (for example, a user equipment, etc.), or may be a chip, a chip system, or a processor, etc. that supports the network device in implementing any one of the above methods, or may be a chip, a chip system, or a processor, etc. that supports the terminal in implementing any one of the above methods. The communication device 7100 may be configured to implement the methods described in the above method embodiments. For details, reference may be made to the description in the above method embodiments.

As shown in FIG. 7A, the communication device 7100 includes one or more processors 7101. The processor 7101 may be a general-purpose processor or a dedicated processor, such as, a baseband processor and a central processing unit. The baseband processor may be used for processing communication protocols and communication data. The central processing unit may be used for controlling the communication device (e.g., a base station, a baseband chip, a terminal, a terminal chip, a DU, or a CU), executing programs, and processing data of the programs. Optionally, the communication device 7100 is configured to implement any one of the above methods. Optionally, the one or more processors 7101 is configured to invoke instructions to cause the communication device 7100 to implement any one of the above methods.

In some embodiments, the communication device 7100 further includes one or more transceivers 7102. When the communication device 7100 includes one or more transceivers 7102, the transceiver 7102 implements at least one of communication steps such as sending and/or receiving (e.g., S201, S202, which is not limited herein) in the above methods, and the processor 7101 implements at least one of other steps (e.g., S201, S202, which is not limited herein). In some embodiments, the transceiver may include a receiver and/or a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 7100 further includes one or more memories 7103 for storing instructions. Optionally, all or part of the memory 7103 may also be located outside the communication device 7100. In some embodiments, the communication device 7100 may include one or more interface circuits 7104. Optionally, the interface circuit 7104 is connected to the memory 7102, and the interface circuit 7104 may be configured to receive signals from the memory 7102 or other apparatuses, and may be configured to send the signals to the memory 7102 or other apparatuses. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 is not limited by FIG. 7A. The communication device may be an independent device or may be part of a larger device. For example, the communication device may be: (1) an independent integrated circuit (IC), or a chip, or a chip system or subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 7B is a block diagram of a chip 7200 according to embodiments of the present disclosure. For the case where the communication device 7100 is a chip or a chip system, reference may be made to the block diagram of the chip 7200 shown in FIG. 7B, which is not limited herein.

The chip 7200 includes one or more processors 7201, and the chip 7200 is configured to implement any one of the above methods.

In some embodiments, the chip 7200 further includes one or more interface circuits 7202. Optionally, terms such as interface circuit, interface, and transceiver pins may be interchangeable with each other. In some embodiments, the chip 7200 further includes one or more memories 7203 for storing data. Optionally, all or part of the memory 7203 may be located outside the chip 7200. Optionally, the interface circuit 7202 is connected to the memory 7203, and the interface circuit 7202 may be configured to receive data from the memory 7203 or other apparatuses, and may be configured to send data to the memory 7203 or other apparatuses. For example, the interface circuit 7202 may read data stored in the memory 7203 and send the data to the processor 7201.

In some embodiments, the interface circuit 7202 implements at least one of communication steps such as sending and/or receiving (e.g., S201, or S202, which is not limited herein) in the above methods. The interface circuit 7202 implements communication steps such as sending and/or receiving in the above method, for example, referring to the data exchange between the processor 7201, chip 7200, memory 7203, or transceivers. In some embodiments, the processor 7201 performs at least one of other steps (e.g., S201, or S202, which is not limited herein).

The modules and/or devices described in various embodiments such as virtual devices, physical devices, chips, etc. may be combined or separated arbitrarily according to the situation. Optionally, some or all of the steps may also be executed collaboratively by multiple modules and/or devices, which is not limited here.

The present disclosure further provides a storage medium storing instructions. When the instructions are executed on the communication device 7100, the communication device 7100 implements any one of the above methods. Optionally, the storage medium is an electronic storage medium. Optionally, the storage medium is a computer-readable storage medium, which is not limited herein, and may also be a storage medium readable by other apparatuses. Optionally, the storage medium may be a non-transitory storage medium, which is not limited herein, and may also be a transitory storage medium.

The present disclosure further provides a program product. When the program product is executed by the communication device 7100, the communication device 7100 implements any one of the above methods. Optionally, the program product is a computer program product.

The present disclosure further provides a computer program that, when executed on a computer, causes the computer to implement any one of the above methods.

## Claims

1. An information receiving method, performed by a terminal, comprising:
receiving indication information sent by a network device, wherein the indication information is configured for the terminal to determine a state of first information, wherein the state comprises at least one of on-demand, or non on-demand.

2. The method of claim 1, wherein the first information comprises at least one of:
synchronization signal and physical down broadcast channel block (SSB); or
system information block (SIB) 1.

3. The method of claim 1 or 2, wherein the indication information comprises at least one of:
a radio resource control (RRC) signaling;
downlink control information (DCI); or
a media access control-control element (MAC CE).

4. The method of claim 3, wherein the first information comprises SSB, and the RRC signaling comprises an information element indicating an SSB index.

5. The method of claim 4, wherein bits in the information element are all 0, and the information element is configured for the terminal to determine a state of the SSB as on-demand; and/or, at least one bit in the information element is not 0, and the information element is configured for the terminal to determine a state of the SSB as non on-demand.

6. The method of claim 3, wherein the first information comprises SIB1, the RRC signaling does not comprise a first search space on a first bandwidth part, and the RRC signaling is configured for the terminal to determine a state of the SIB1 as on-demand; and/or, the RRC signaling comprises a first search space on a first bandwidth part, and the RRC signaling is configured for the terminal to determine a state of the SIB1 as non on-demand.

7. The method of claim 6, wherein the first bandwidth part does not comprise at least one of:
an initial bandwidth part where a control resource set CORESET#0 is located;
an active bandwidth part with a first parameter same as that of the initial bandwidth part and a frequency domain range comprising CORESET#0; or
an active bandwidth part in the initial bandwidth part.

8. The method of claim 3, wherein the DCI comprises at least one of:
legacy DCI;
newly defined DCI; or
legacy DCI scrambled with a newly defined radio network temporary identity.

9. The method of claim 8, wherein the legacy DCI comprises at least one of:
first DCI scrambled with a system information radio network temporary identity (SI-RNTI); or
second DCI scrambled with a paging radio network temporary identity (P-RNTI).

10. The method of claim 9, wherein reserved bits in the legacy DCI are configured for the terminal to determine the state of the first information.

11. The method of claim 10, wherein a short message indicator information field in the second DCI is configured to indicate paging scheduling, and the reserved bits comprise bits in the short message indicator information field; and/or, a short message indicator information field in the second DCI is configured to indicate short message scheduling, and the reserved bits comprise bits outside the short message indicator information field.

12. The method of claim 3, wherein the MAC CE comprises at least one of:
a legacy MAC CE; or
a newly defined MAC CE.

13. The method of claim 12, wherein the legacy MAC CE comprises at least one of:
a first MAC CE for cell activation; or
a second MAC CE for cell deactivation.

14. The method of claim 13, wherein reserved bits in the legacy MAC CE are configured for the terminal to determine the state of the first information.

15. The method of any one of claims 1 to 14, wherein the indication information further comprises information of at least one cell, and the indication information is configured for the terminal to determine at least one of: a state of the first information in the at least one cell.

16. The method of any one of claims 1 to 15, wherein the indication information is further configured for the terminal to determine an effective time of the state, or the effective time is determined based on a predefined manner.

17. An information sending method, performed by a network device, comprising:
sending indication information to a terminal, wherein the indication information is configured for the terminal to determine a state of first information, wherein the state comprises at least one of on-demand, or non on-demand.

18. The method of claim 17, wherein the first information comprises at least one of:
synchronization signal and physical down broadcast channel block (SSB); or
system information block (SIB)1.

19. The method of claim 17 or 18, wherein the indication information comprises at least one of:
a radio resource control (RRC) signaling;
downlink control information (DCI); or
a media access control-control element (MAC CE).

20. The method of claim 19, wherein the first information comprises SSB, and the RRC signaling comprises an information element indicating an SSB index.

21. The method of claim 20, wherein bits in the information element are all 0, and the information element is configured for the terminal to determine a state of the SSB as on-demand; and/or, at least one bit in the information element is not 0, and the information element is configured for the terminal to determine a state of the SSB as non on-demand.

22. The method of claim 19, wherein the first information comprises SIB1, the RRC signaling does not comprise a first search space on a first bandwidth part, and the RRC signaling is configured for the terminal to determine a state of the SIB1 as on-demand; and/or, the RRC signaling comprises a first search space on a first bandwidth part, and the RRC signaling is configured for the terminal to determine a state of the SIB1 as non on-demand.

23. The method of claim 21, wherein the first bandwidth part does not comprise at least one of:
an initial bandwidth part where a control resource set CORESET#0 is located;
an active bandwidth part with a first parameter same as that of the initial bandwidth part and a frequency domain range comprising CORESET#0; or
an active bandwidth part in the initial bandwidth part.

24. The method of claim 19, wherein the DCI comprises at least one of:
legacy DCI;
newly defined DCI; or
legacy DCI scrambled with a newly defined radio network temporary identity.

25. The method of claim 24, wherein the legacy DCI comprises at least one of:
first DCI scrambled with a system information radio network temporary identity (SI-RNTI); or
second DCI scrambled with a paging radio network temporary identity (P-RNTI).

26. The method of claim 25, wherein reserved bits in the legacy DCI are configured for the terminal to determine the state of the first information.

27. The method of claim 26, wherein a short message indicator information field in the second DCI is configured to indicate paging scheduling, and the reserved bits comprise bits in the short message indicator information field; and/or, a short message indicator information field in the second DCI is configured to indicate short message scheduling, and the reserved bits comprise bits outside the short message indicator information field.

28. The method of claim 19, wherein the MAC CE comprises at least one of:
a legacy MAC CE; or
a newly defined MAC CE.

29. The method of claim 28, wherein the legacy MAC CE comprises at least one of:
a first MAC CE for cell activation; or
a second MAC CE for cell deactivation.

30. The method of claim 29, wherein reserved bits in the legacy MAC CE are configured for the terminal to determine the state of the first information.

31. The method of any one of claims 17 to 30, wherein the indication information further comprises information of at least one cell, and the indication information is configured for the terminal to determine at least one of: a state of the first information in the at least one cell.

32. The method of any one of claims 17 to 31, wherein the indication information is further configured for the terminal to determine an effective time of the state, or the effective time is determined based on a predefined manner.

33. An information receiving apparatus, comprising:
a receiving module, configured to receive indication information sent by a network device, wherein the indication information is configured for the terminal to determine a state of first information, wherein the state comprises at least one of on-demand, or non on-demand.

34. An information sending apparatus, comprising:
a sending module, configured to send indication information to a terminal, wherein the indication information is configured for the terminal to determine a state of first information, wherein the state comprises at least one of on-demand, or non on-demand.

35. An information sending method, comprising:
sending indication information by a network device to a terminal; and
determining by the terminal, a state of first information according to the indication information, wherein the state comprises at least one of on-demand, or non on-demand.

36. A terminal, comprising:
one or more processors,
wherein the terminal is configured to implement the information receiving method of any one of claims 1 to 16.

37. A network device, comprising:
one or more processors,
wherein the network device is configured to implement the information sending method of any one of claims 17 to 32.

38. A communication system, comprising a terminal and a network device, wherein the terminal is configured to implement the information receiving method of any one of claims 1 to 16, and the network device is configured to implement the information sending method of any one of claims 17 to 32.

39. A storage medium storing instructions that, when executed on a communication device, cause the communication device to implement the information receiving method of any one of claims 1 to 16 and/or the information sending method of any one of claims 17 to 32.
